# EUROPEAN PATENT SPECIFICATION

(11) **EP 0 317 297 B1**
(45) Date of publication and mention of the grant of the patent: **23.02.1994**
(21) Application number: 88310828.4
(22) Date of filing: 16.11.1988
(51) Int. Cl.: G11B 23/087

(54) **Tape cassette**
Bandkassette
Cassette à bande

(30) Priority: 20.11.1987 JP 294783/87
(43) Date of publication of application: 24.05.1989
(73) Proprietor: SONY CORPORATION, Tokyo 141 (JP)
(72) Inventor: Ozawa, Kazuo c/o Sony Magnetic Products Inc., Shinagawa-ku Tokyo (JP)
(74) Representative: Ayers, Martyn Lewis Stanley

(56) References cited:
- EP-A- 0 190 908
- DE-A- 2 033 503
- DE-A- 3 511 227
- DE-U- 8 516 472
- GB-A- 2 176 170

## Description

This invention relates to tape cassettes such as those suitable for use for video tape, audio tape, and the like.

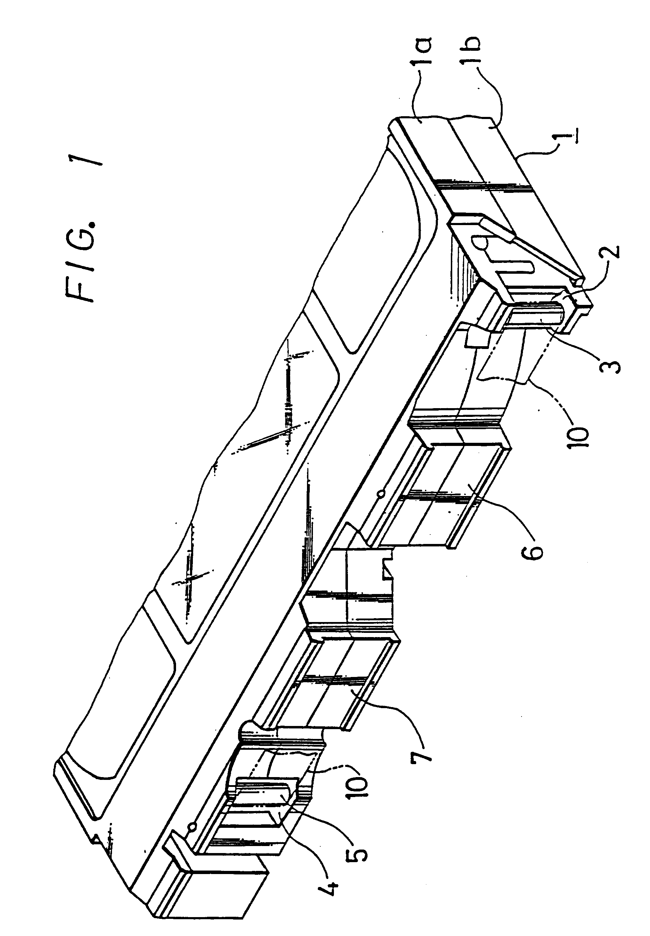

In the prior art tape cassettes for video tape as shown in FIG. 1 have been used. Referring to FIG. 1, there is generally shown a tape cassette 1. This tape cassette 1 has an upper half 1a and a lower half 1b joined together and a supply reel and a take-up reel (not shown) are incorporated therewithin. Such a structure is shown in U.S. Patents Nos. 4,386,746 and 4,546,936, for example.

In addition, a magnetic tape 10 loaded between both the reels within the tape cassette 1 is exposed to the outside between a tape guide 3 disposed at one end of the front side of this tape cassette 1 where a tape outlet 2 is provided, and a tape guide 5 at the other end of the front side where a tape inlet 4 is provided. The front side of the tape cassette 1 is covered by a front lid (not shown) during storage, and uncovered to expose the magnetic tape 10 only when the tape cassette is loaded in a video tape recorder.

Moreover, tape slack regulating walls 6 and 7 are provided on the front side of the tape cassette 1 at two positions close to the back side of the exposed magnetic tape 10. These tape slack regulating walls 6 and 7 each provide a flat surface parallel to the magnetic tape 10 and which are spaced by slight gap from the tape.

When this tape cassette 1 is loaded in the video tape recorder in order that the magnetic tape 10 can be recorded or reproduced, the magnetic tape 10 partially exposed to the front side is pulled out and wrapped around a rotating drum so that signals are recorded on or reproduced from the tape by magnetic heads provided on the rotating head drum. In order to fast forward and rewind the magnetic tape 10, the magnetic tape 10 pulled out for recording or reproduction is pulled back to extend straight between the tape outlet 2 and the tape inlet 4 and the take-up reel or supply reel is rotated at high speed. At this time, the tape slack regulating walls 6 and 7 close to the back side of the exposed, straight portion of the magnetic tape 10 act to prevent the magnetic tape 10 from slacking.

During the time that the magnetic tape 10 is fast forwarded or rewound, however, the tension in the magnetic tape often varies greatly, to an extent that the magnetic tape 10 comes in contact with the tape slack regulating walls 6 and 7. When the tape contacted with the walls during the time that the tension was changed, the reel often stopped rotating to interrupt the fast forwarding (rewinding) operation. Particularly when the magnetic tape 10 has a certain coating on its back side, or is a so-called "back-coating" type, the friction coefficient at the time of the contact with the tape slack regulating walls 6 and 7 is so high that the tape easily sticks to the regulating walls 6 and 7 and therefore the possibility that the fast forwarding (rewinding) operation will be interrupted is high.

In order to prevent the above problem, the whole tape slack regulating wall is sloped so that its contact area with the magnetic tape is reduced as proposed in Japanese Utility Model Laid-Open Gazette No. 118167.1986. With this structure, however, the magnetic tape is not satisfactorily prevented from coming in contact with the tape slack regulating walls and thereby stopping the rotation of the reels. EP-A-190908 discloses a tape cassette comprising tape slack regulating walls provided close to an exposed portion of a tape, these walls extending generally longitudinally in the direction of travel of the tape. These walls are planar and are provided on their planar surfaces with a plurality of ribs. Relative to a flat surface, the provision of ribs reduces the area of possible contact between the tape and the tape slack regulating walls. However excessive spacing of these ribs can allow the tape to be attracted into contact with the walls. By choosing an appropriate spacing of these ribs it is possible to prevent such contact, or even to produce an air barrier between the tape and the ribbed planar surfaces. However, in order to produce an air film the ribs have to be spaced no more than 8mm apart the preferred spacing is 4mm. In having to provide a large number of closely spaced ribs the tips of the ribs still present a substantial area of possible contact between the tape and the tape slack regulating walls.

According to the present invention there is provided a tape cassette comprising tape slack regulating walls provided close to an exposed portion of a tape, said walls extending generally longitudinally in a direction of travel of the tape, characterised in that the walls are concavely curved in the tape travel direction to present only small contact areas to the tape and are stepped away from the tape to each provide a recess extending longitudinally in the tape travel direction.

The recessed steps extending longitudinally in the tape travel direction cause an air film to be generated between the wound tape and the tape slack regulating walls. This film acts to prevent the tape from coming into contact with the walls. However, should the tape contact the walls, the concave curvature of the walls means that the walls present only small areas of contact to the tape, preventing this contact from interrupting winding of the tape. In contrast to the arrangement of D1 it is not necessary to increase the area of possible contact between the tape and the tape slack regulating walls in order to provide an adequate air film.

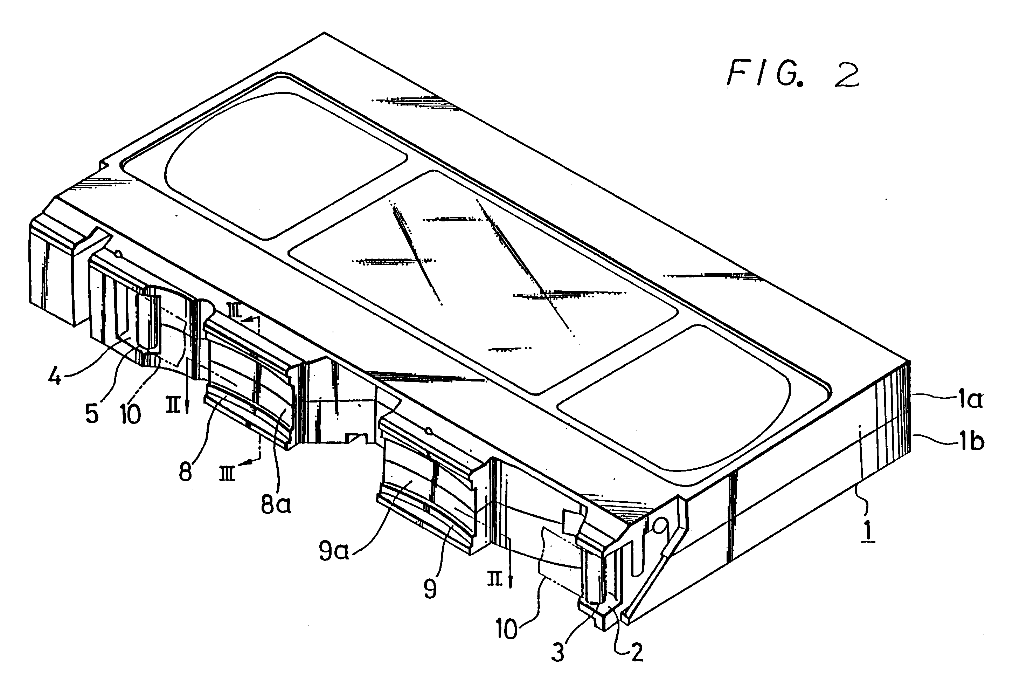

In the embodiment of tape cassette 1 in accordance with the present invention and which is described hereinafter with reference to Fig. 2, tape slack regulating walls 8, 9 are provided close to the exposed portion of the tape. The tape slack regulating walls 8, 9 are curved, concavely, along the tape travel direction and stair portions 8a, 9a parallel to the tape travel direction are provided on the curved tape-slack regulating walls 8, 9. In operation the tape bridges the area between the stair portions 8a, 9a. Because the stair portions 8a, 9a are provided on the tape slack regulating walls 8, 9, an air film is formed between the tape and the walls during tape travel, making it difficult for the tape to stick to the tape slack regulating walls 8, 9. Even if it should contact therewith, the curved tape slack regulating walls 8, 9 exert almost no adverse influence on the tape travel because of the very small contact area, and thus the tape can be kept stable in its travel upon fast forwarding or rewinding.

The invention will be further described by way of non-limitative example, with reference to the accompanying drawings, in which:-
Figure 1 is a view of part of a prior art tape cassette;
Figure 2 is a perspective view of one embodiment of a tape cassette of this invention;
Figure 3 is a cross-sectional diagram taken along line II-II of Figure 2;
Figure 4 is a cross-sectional diagram taken along line III-III of Figure 2;
Figure 5 is an isometric view of a second embodiment; and
Figure 6 is a cross-sectional plan view, like Figure 3 showing the embodiment of Figure 5.

A first embodiment of a tape cassette of this invention will be described with reference to Figures 2 to 4. In Figures 2 to 4, like elements corresponding to those in Figure 1 are identified by the same reference numerals and will not be described in detail.

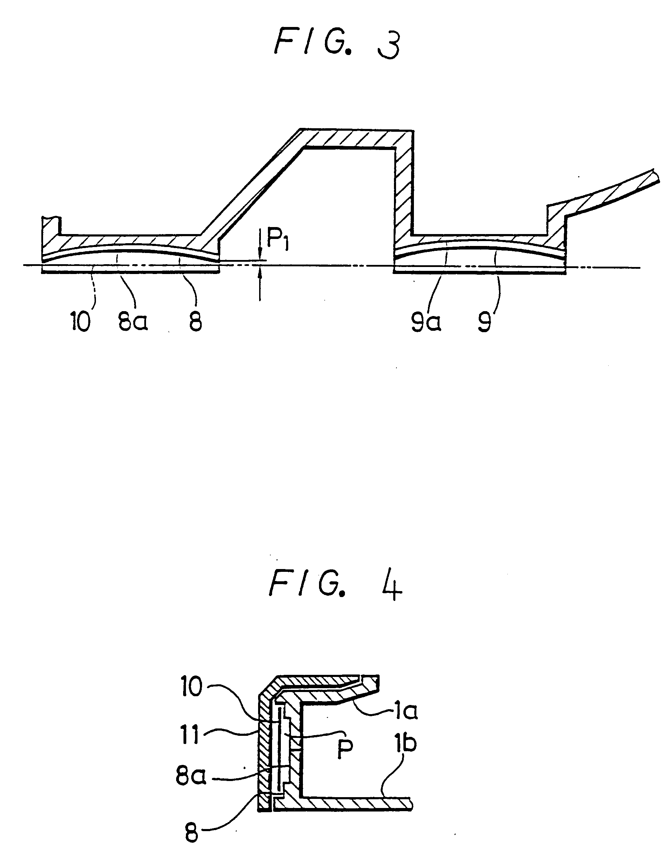

This embodiment of a tape cassette is a video tape cassette that can be loaded in the same type of conventional video tape recorder as that shown in Figure 1. As shown in Figure 2, tape slack regulating walls 8 and 9 are provided on the tape-exposed portion between the tape guides 3 and 5 that are disposed on the front side of the tape cassette 1. These tape slack regulating walls 8 and 9 are close to the back side of the magnetic tape 10 and curved in a concave manner along the direction of travel of the magnetic tape 10. In other words, the tape slack regulating walls 8 and 9, as shown in FIGS 2 and 3, are curved so that the gap, P1 between the back side of the magnetic tape 10 and the walls is the narrowest at the ends close to the tape outlet 2 and the tape inlet 4 and becomes gradually larger as one goes to their centers.

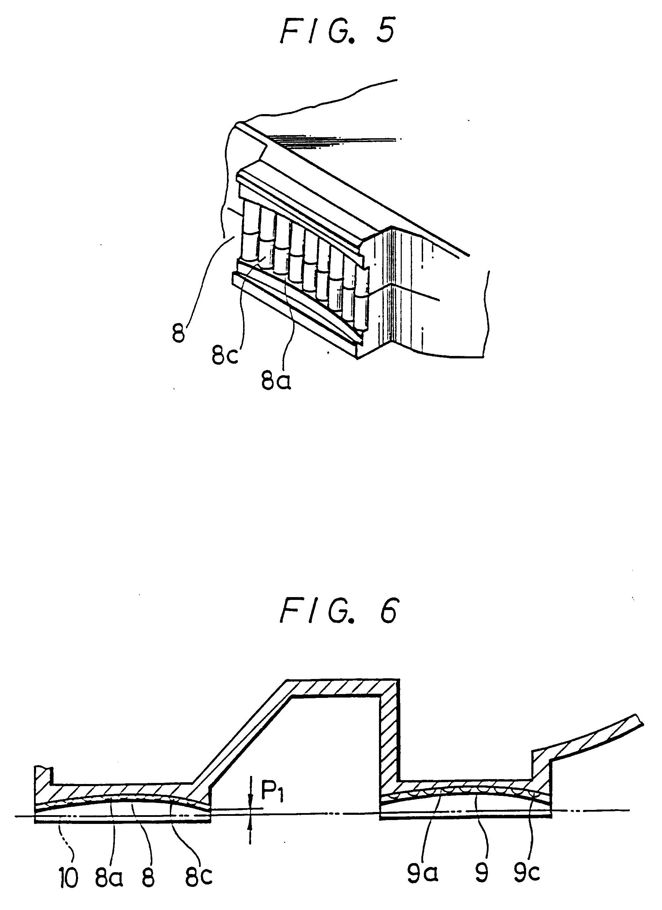

These curved tape slack regulating walls 8 and 9, as shown in FIGS. 2 and 4, have stair portions 8a, 9a parallel to the direction of travel of the magnetic tape 10 provided toward the center relative to the widthwise direction of the magnetic tape 10. The gap betwen the stair portion 8a, 9a and the back side of the magnetic tape 10 is larger than that between any other cassette portion and the back side of the tape. In FIG. 4, 11 represents the front lid, omitted in FIG. 2.

The other portions of this tape cassette 1 are constructed in the same way as that shown in FIG. 1.

This tape cassette 1 constructed as described above has the feature that since the tape slack regulating walls 8, 9 have their stair portions 8a,9a provided, defined, an uninterrupted air film is formed between the stair portions 8a, 9a and the magnetic tape 10 when the magnetic tape 10 is traveling, and acts to prevent the magnetic tape 10 from coming in contact with the tape slack regulating walls 8,9 thus making it difficult for the magnetic tape 10 to make substantial contact with the tape slack regulating walls 8,9. In addition, because the tape slack regulating walls 8, 9 are curved, the magnetic tape 10 will not stick to the regulating walls 8, 9 because of the very small contact area even if the magnetic tape 10 should have some contact with the tape slack regulating walls 8, 9. Thus, even when the tape tension varies during the time that the magnetic tape 10 is forwarded or rewound at high speed, the magnetic tape 10 is scarcely in contact with the tape slack regulating walls 8, 9. Because of the small contact area the reels will not be stopped or interrupted in their rotation.

A second embodiment of the invention is shown in FIGURES 5 and 6 in which reference numerals same as those in FIGURES 2 to 4 designate the same parts or elements. There the stair or concave portions 8a, 9a are respectively provided with a number of rounded projections 8c, 9c which are arranged in the direction transverse to the tape running direction and over the whole lengths thereof. The surface of each of projections 8c, 9c closest to the tape is preferably practically the same distance as that of the first embodiment. This structure also provides an effective air curtain support for the tape without providing substantial contact between the tape and the cassette during tape run.

The other structure of the second embodiment is substantially the same as that of the first embodiment.

According to the second embodiment of the tape cassette of this invention, the magnetic tape is prevented from substantial contact with the tape slack regulating walls and even if some slight contact is made therewith, the magnetic tape is kept stable in its travel because the contact area is very small due to the provision of rounded projections. Thus, the reels are not interrupted in their rotation upon fast forwarding or rewinding.

## Claims

1. A tape cassette comprising tape slack regulating walls (8, 9) provided close to an exposed portion of a tape, said walls extending generally longitudinally in a direction of travel of the tape, characterised in that the walls are concavely curved in the tape travel direction to present only small contact areas to the tape and are stepped away from the tape to each provide a recess (8a, 9a) extending longitudinally in the tape travel direction.

2. A cassette as claimed in claim 1, wherein each wall presents four spaced apart contact points to the tape, two on either side of a respective recess (8a, 9a).

3. A cassette as claimed in claim 1 or claim 2, wherein a plurality of transverse projections are provided in each said recess (8a, 9a).

## Patentansprüche

1. Bandkassette, die bandspielregulierende Wände (8,9) aufweist, die dicht bei einem unverdeckten Bereich eines Bandes vorgesehen sind, wobei die Wände allgemein longitudinal sich in einer Laufrichtung des Bandes erstrecken, dadurch gekennzeichnet, daß die Wände konkav in der Bandlaufrichtung gebogen sind, damit sie nur kleine Kontaktflächen für das Band bilden und vom Band weg abgestuft sind, damit für jede eine Vertiefung (8a, 9a) vorgesehen wird, die sich längs in der Bandlaufrichtung erstreckt.

2. Kassette nach Anspruch 1, wobei jede Wand vier voneinander beabstandete Kontaktpunkte für das Band bildet, und zwar zwei auf jeder Seite einer entsprechenden Vertiefung (8a, 9a).

3. Kassette nach Anspruch 1 oder 2, wobei mehrere Quererhebungen in jeder Vertiefung (8a, 9a) vorgesehen sind.

## Revendications

1. Cassette de bande comprenant des parois de régulation du mou de bande (8, 9) disposées près d'une partie visible de la bande, lesdites parois s'étendant globalement longitudinalement dans la direction de défilement de la bande, caractérisée en ce que les parois sont incurvées de façon concave dans la direction de défilement de bande pour présenter seulement de petites superficies de contact à la bande et sont en gradins dans le sens opposé à la bande de façon à fournir chacune un évidement (8a, 9a) s'étendant longitudinalement dans la direction de défilement de bande.

2. Cassette selon la revendication 1, dans laquelle chaque paroi présente quatre points de contact espacés avec la bande, deux de chaque côté d'un évidement respectif (8a, 9a).

3. Cassette selon la revendication 1 ou la revendication 2, dans laquelle plusieurs saillies transversales sont disposées dans chacun desdits évidements (8a, 9a).
